# DEMANDE DE BREVET EUROPEEN

(11) **EP 0 895 799 A1**
(43) Date de publication de la demande: **10.02.1999**
(21) Numéro de dépôt: 98402022.2
(22) Date de dépôt: 07.08.1998
(51) Int. Cl.: B01D 36/02

(54) **Procédé et installation pour le traitement par filtration de fluide d'usinage**

(30) Priorité: 07.08.1997 FR 9710160
(71) Demandeur: Koch International, 3401 Dudelange (LU); Boll Filter France, 78000 Magnaville (FR)
(72) Inventeur: Desmicht, Denis, 54530 Pagny sur Moselle (FR); Siffert, Christophe, 57000 Metz (FR); Lafouge, Hubert, 691110 Sainte Foy les Lyon (FR)
(74) Mandataire: Sabatier, Marc

(57) **Abrégé**

La présente invention concerne un procédé pour le traitement par filtration des fluides d'usinage, de refroidissement, de lavage, d'une machine-outil, centre d'usinage ou machine à laver, caractérisé en ce qu'il consiste :
- à réaliser une filtration frontale des fluides ou flux principal chargés de résidus solides et par laquelle on obtient un rétentat (R) selon un certain degré de finesse,
- à réaliser successivement une filtration tangentielle d'une partie du rétentat (R) issu de la filtration frontale en vue d'obtenir un perméat (P) selon un degré de finesse plus élevé que celui du rétentat (R),
- à diriger simultanément le rétentat (R) vers un poste requérant un degré de finesse moindre et le perméat (P) vers un poste (4) requérant un degré de finesse plus élevé.

## Description

La présente invention concerne un procédé pour le traitement par filtration des fluides d'usinage, de refroidissement, de lavage, d'une machine-outil, un centre d'usinage ou une machine à laver.

En ce qui concerne plus particulièrement l'usinage ou traitement de surface, ceux-ci génèrent des déchets généralement organiques ou minéraux tels qu'abrasifs ou poussières métalliques qu'il convient d'éliminer avant de rejeter ces fluides, après utilisation, issus de tels traitements. Il convient également de les éliminer en vue de leur recyclage pour une nouvelle utilisation.

C'est le cas par exemple dans les installations industrielles où il existe un circuit général principal de distribution d'une émulsion ou d'un lubrifiant destiné aux opérations d'usinage et qui sont distribués par colonne sur chaque machine concernée.

Ces machines sont productrices de copeaux mélangés à des impuretés et à l'émulsion ou au lubrifiant et doivent être récupérés en vue de leur filtration pour élimination des copeaux, abrasifs ou poussières métalliques avant de redistribuer le fluide exempt d'impuretés sur lesdites machines.

Les centrales de filtration généralement connues permettent des filtrations selon un degré de finesse de l'ordre de 100 µ.

Dans les installations modernes d'usinage, il s'est vite avéré que pour protéger certaines machines, il était nécessaire d'améliorer la filtration du liquide car on utilise parfois des outils creux et le liquide arrive sur la pointe de l'outil, d'où la nécessité d'une grande finesse de filtration qui devra être de l'ordre de 50 µ au maximum.

Dans certaines autres applications, il est même parfois nécessaire de descendre encore davantage ce degré de filtration, notamment dans l'application aux outils à broches à eau qu'il est avantageux de lubrifier par le même fluide distribué à l'ensemble des organes soumis à lubrification. En effet, ceci permet de diminuer l'utilisation d'autres huiles qui deviennent parasites par le fait de leur mélange favorisant le développement bactérien.

L'un des objectifs de l'invention est donc l'obtention d'un degré de finesse de filtration plus élevé afin de répondre à certains cas spécifiques d'utilisation.

Bien entendu, on aurait pu imaginer descendre ce degré de filtration à partir d'une cellule à filtration frontale classique, en augmentant la finesse du gâteau, mais on se heurte alors à un problème qui consiste à utiliser des filtres consommables qui sont d'un prix de revient très élevé, tant au point de vue prix d'achat que de manipulation.

De plus, on ne peut pas descendre en finesse pour les éléments filtrants régénérables par nettoyage à contre-courant car leur durée de vie deviendrait trop limitée. En effet, elle passerait d'environ trois ans d'utilisation à deux à quatre mois d'utilisation.

En fait, le problème à résoudre et qui doit être considéré comme une première phase de la démarche inventive de l'invention, consiste à disposer dans une même installation, d'un fluide dont le degré de filtration serait, par exemple, de 50 µ pour certaines destinations et d'un fluide dont le degré de filtration serait, par exemple, de 3 µ pour d'autres destinations.

Ceci permettrait de réserver le fluide filtré à 50 µ aux opérations de service sur une machine comme le nettoyage de la table de travail et le refroidissement des outils creux et des joints tournants et le fluide filtré à 3 µ pour le refroidissement d'outils particuliers, comme évoqué ci-dessus.

Il a déjà été proposé, par la demande de brevet d'invention français N° 2.683.154, une installation permettant d'obtenir une filtration selon un degré de finesse supérieur a la normale, et qui consiste à soumettre les fluides chargés d'impuretés à une pré-filtration frontale et de diriger ensuite le filtrat qui en est issu dans un concentrateur, puis à filtrer par filtration tangentielle au moyen d'une membrane poreuse ledit filtrat stocké dans le concentrateur.

Une telle installation présente l'inconvénient majeur de nécessiter l'utilisation d'un concentrateur. De plus, cette installation implique d'alimenter la totalité des postes à lubrifier sur la machine par un fluide ayant le même degré de finesse de filtration, alors que certains d'entre eux ne le nécessitent pas.

La présente invention a pour but de remédier à ces inconvénients en permettant d'obtenir des filtrations selon des degrés de finesse différente sans modification du volume horaire traité, car la somme des volumes reste égale. De plus, cette filtration est effectuée sans devoir recourir à un bac de concentration comme prévu dans l'art antérieur.

A cet effet, l'invention concerne un procédé pour le traitement par filtration des fluides d'usinage, de refroidissement, de lavage, d'une machine-outil, centre d'usinage ou machine à laver, caractérisé en ce qu'il consiste :
- à réaliser une filtration frontale des fluides ou flux principal chargés de résidus solides et par laquelle on obtient un rétentat selon un certain degré de finesse,
- à réaliser successivement une filtration tangentielle d'une partie du retentat issu de la filtration frontale en vue d'obtenir un perméat selon un degré de finesse plus élevé que celui du rétentat,
- à diriger simultanément le rétentat vers un poste requérant un degré de finesse moindre et le perméat en vue de sa distribution vers un poste requérant un degré de finesse plus élevé.

L'invention concerne également une installation mettant en oeuvre le procédé précité.

Une telle installation présente l'avantage d'être d'une mise en oeuvre très simple, s'affranchissant des aléas et accidents pouvant provoquer une détérioration du bain, tout en restant insensible aux variations physico-chimiques du flux principal.

Elle permet également l'élimination des colmatages, donc des arrêts de machines dus à la présence d'huile, de graisse, de champignons, conséquences des fuites accidentelles ou à une détérioration du fluide en circulation. Enfin, elle permet d'obtenir un fluide régénéré, parfaitement filtré.

De plus, comme nous le verrons dans la description qui va suivre, l'installation permet d'éviter toute utilisation de matière consommable, notamment au niveau du filtre utilisé.

La présente invention concerne également les caractéristiques qui ressortiront au cours de la description qui va suivre et qui devront être considérées isolément ou selon toutes leurs combinaisons techniques possibles.

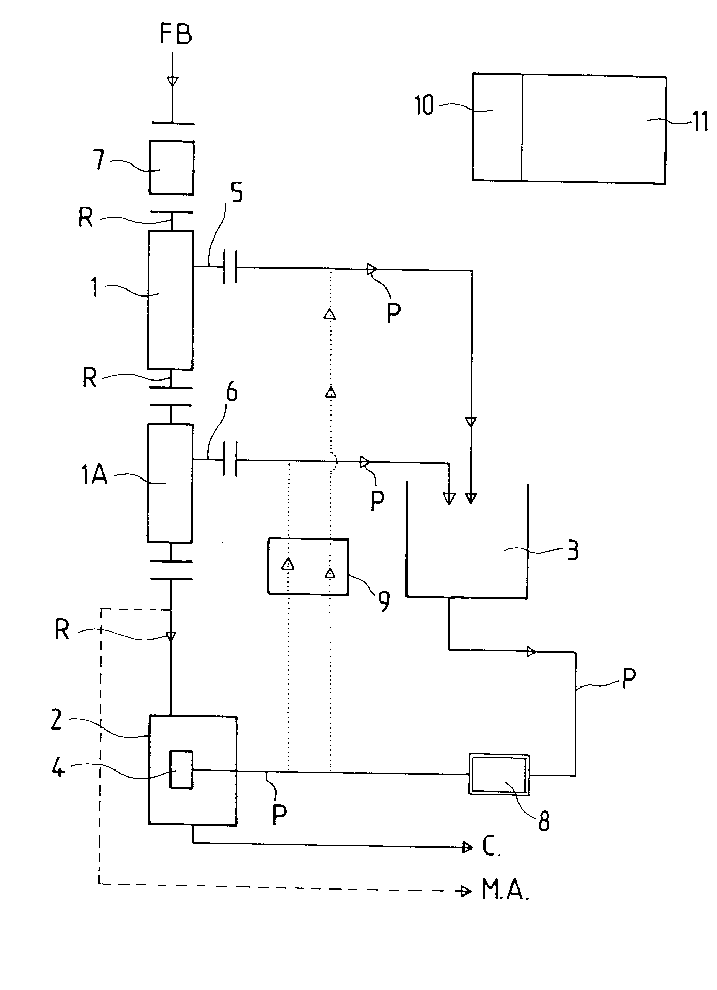

Cette description, donnée à titre d'exemple non limitatif, fera mieux comprendre comment l'invention peut être réalisée, en référence au dessin annexe sur lequel :
la figure unique représente un schéma de principe d'une installation de filtration selon l'invention.

L'installation de filtration représentée sur la figure unique est destinée au traitement, en circuit ouvert, de fluides de lubrification et/ou de refroidissement ou encore de lavage d'une machine-outil.

Bien entendu, la même installation pourra être utilisée dans tout centre d'usinage ou de lavage.

D'une manière globale, l'installation comprend au moins une cellule de filtration 1 apte à assurer d'une part la filtration tangentielle des fluides chargés de résidus solides, et par laquelle filtration on obtient un rétentat selon un certain degré de finesse à diriger vers un poste 2 requérant un tel degré de finesse.

D'autre part, la cellule de filtration 1 assure simultanément la filtration tangentielle dudit rétentat R pour obtenir un perméat P selon un degré de finesse plus élevé et le diriger vers un bac tampon 3 en vue de sa distribution vers un poste 4 requérant un degré de finesse plus élevé. Le rétentat R issu de la filtration frontale et le perméat P issu de la filtration tangentielle étant dirigés vers leurs destinations respectives 2 ou 4 de manière simultanée.

Il est à noter que le perméat a un degré de filtration égal à 3 µ, alors que le rétentat a un degré de filtration égal à 50 µ.

Préférentiellement et selon l'exemple représenté sur la figure, l'installation comprend deux cellules de filtration tangentielle 1 et 1A disposées en série et qui sont traversées successivement par le flux principal pour obtenir le rétentat R, une partie du flux principal R étant prélevée au passage de chaque cellule 1, 1A pour être filtrée tangentiellement par des membranes et être dirigée simultanément vers le bac tampon 3 par des sorties 5 et 6 en dérivation entre elles.

Il est à noter que l'installation dispose, mais de manière non obligatoire, d'une cellule de pré-filtration frontale 7 disposée en amont des cellules de filtration tangentielle 1 et 1A disposées en série.

La présence d'une cellule de pré-filtration 7 a pour avantage de protéger les membranes de filtration tangentielle et de parfaire la filtration du fluide principal, afin de l'utiliser en fluide classique sur la machine.

Le perméat se trouvant dans le bac tampon 3 est aspiré grâce à une pompe de reprise 8, d'un débit en litres/minute prédéterminé, pour le diriger à la pression voulue vers le poste 4, en l'occurrence une machine-outil.

Selon le présent exemple, l'installation comprend un bac tampon en aucun cas obligatoire, mais il peut être imposé par des contraintes techniques liées au cycle de la machine.

Comme déjà évoqué ci-dessus, le rétentat R issu frontalement des cellules 1, 1A alimente simultanément le poste 2.

On notera que l'installation comporte en outre un dispositif de nettoyage à contre-courant 9 des cellules de filtration tangentielle 1, 1A.

Par ailleurs, la surface de la membrane des cellules de filtration tangentielle 1, 1A est fonction du volume horaire de perméat P désirant être obtenu.

Egalement, le volume du bac tampon 3 est fonction du volume horaire de perméat P désirant être obtenu.

L'installation comprend un dispositif de contrôle et de régulation 10 piloté par une armoire de commande 11 gérant l'ensemble de ladite installation.

Les nouveaux fluides chargés de résidus solides issus des postes 2 et 4 seront dirigés à nouveau vers la centrale C et les fluides bruts FB seront à nouveau réintroduits dans l'installation.

Au moins une fois par an, l'installation sera purgée de son rétentat R et, conséquemment, du perméat P en le dirigeant vers un poste de maintenance MA.

A titre indicatif, les cellules de filtration tangentielle 1, 1A sont constituées par des modules de filtration référence CFCC commercialisés par la société "LE CARBONE LORRAINE" .

Les cellules de filtration décrites ci-dessus peuvent être mises en oeuvre tant sur la conduite principale qu'en dérivation de celle-ci, sans modification du système de distribution du fluide existant et nécessaire.

## Revendications

1. Procédé pour le traitement par filtration des fluides d'usinage, de refroidissement, de lavage, d'une machine-outil, centre d'usinage ou machine à laver, caractérisé en ce qu'il consiste ;
- à réaliser une filtration frontale des fluides ou flux principal chargés de résidus solides et par laquelle on obtient un rétentat (R) selon un certain degré de finesse,
- à réaliser successivement une filtration tangentielle d'une partie du retentat (R) issu de la filtration frontale en vue d'obtenir un perméat (P) selon un degré de finesse plus élevé que celui du rétentat (R),
- à diriger simultanément le rétentat (R) vers un posta requérant un degré de finesse moindre et le perméat (P) vers un poste (4) requérant un degré de finesse plus élevé.

2. Installation pour le traitement par filtration des fluides d'usinage, de refroidissement, de lavage, d'une machine-outil, centre d'usinage ou machine à laver, caractérisée en ce qu'elle comprend au moins une cellule de filtration (1, 1A) apte à assurer, d'une part, la filtration frontale des fluides chargés de résidus solides et par laquelle filtration, on obtient un rétentat (R) selon un certain degré de finesse, à diriger vers un poste 2 requérant un tel degré de finesse et, d'autre part, à assurer simultanément la filtration tangentielle dudit rétentat (R) pour obtenir un perméat (P) selon un degré de finesse plus élevé et le diriger vers un poste 4 requérant un degré de finesse plus élevé, le rétentat (R) issu de la filtration frontale et le perméat (P) issu de la filtration tangentielle étant dirigés vers leurs destinations respectives de manière simultanée.

3. Installation selon la revendication 2, caractérisée en ce qu'elle comprend au moins deux cellules de filtration tangentielle (1 ,1A) disposées en série et qui sont traversées successivement par le flux principal pour obtenir le rétentat (R), une partie du flux principal (R) étant prélevée au passage de chaque cellule (1, 1A) pour être filtrée tangentiellement par des membranes et être dirigée simultanément vers un poste (4) par des sorties (5, 6) en dérivation entre elles.

4. Installation selon les revendications 2 ou 3, caractérisée en ce qu'elle comprend en outre une cellule de pré-filtration frontale (7) disposée en amont des cellules de filtration tangentielle (1, 1A) disposées en série.

5. Installation selon l'une des revendications 2 à 4, caractérisée en ce que la surface de la membrane de la cellule de filtration tangentielle (1, 1A) est fonction du volume horaire de perméat (P) désirant être obtenu.

6. Installation selon l'une des revendications 2 à 5, caractérisée en ce qu'elle comprend en outre un dispositif de nettoyage à contre-courant (9) de la cellule de filtration tangentielle (1, 1A).

7. Installation selon l'une des revendications 2 à 6, caractérisée en ce qu'elle comprend en outre un dispositif de contrôle et de régulation (10) piloté par une armoire de commande (11) gérant l'ensemble de ladite installation.

8. Installation selon l'une des revendications 2 à 7, caractérisée en ce que le degré de finesse de filtration est de 50 µ pour le rétentat (R) et de 3 µ pour le perméat (P)

9. Installation selon l'une des revendications 2 à 8 caractérisée en ce que le perméat (P) issu des cellules de filtration tangentielles (1.1A) est dirigé vers un bac tampon (3) en vue de sa distribution vers un poste (4) requiérant un degré de finesse plus élevé.

10. Installation selon l'une des revendications 2 à 9, caractérisée en ce que le volume du bac tampon (3) est fonction du volume horaire de perméat (P) désirant être obtenu.
